# EUROPEAN PATENT APPLICATION

(11) **EP 3 015 166 A1**
(43) Date of publication of application: **04.05.2016**
(21) Application number: 14816649.9
(22) Date of filing: 19.06.2014
(51) Int. Cl.: B01J 35/02, B01J 19/00, B01J 19/24, C01B 3/38, C01B 3/48, C01B 3/58

(54) **CATALYST STRUCTURE, REACTOR, AND MANUFACTURING METHOD FOR CATALYST STRUCTURE**

(30) Priority: 26.06.2013 JP 2013133516
(71) Applicant: IHI Corporation, Tokyo 135-8710 (JP)
(72) Inventor: HAMADA, Koki, Tokyo 135-8710 (JP); KAMATA, Hiroyuki, Tokyo 135-8710 (JP); YOSHINOYA, Takuya, Tokyo 135-8710 (JP)
(74) Representative: Lamb, Martin John Carstairs
(86) International application number: PCT/JP2014/066279
(87) International publication number: WO 2014/208444

(57) **Abstract**

A catalyst structure (300) is provided in a reaction-side flow passage of a reactor through which a fluid as a reaction object flows. The catalyst structure (300) includes: a plurality of pillar-shaped pin rods (310) extending in a direction intersecting with a flow direction of the fluid in the reaction-side flow passage; and a catalyst carried on surfaces of the pin rods (310) to promote a reaction of the fluid.

## Description

### TECHNICAL FIELD

The present invention relates to a catalyst structure that promotes the reaction of a reaction fluid, which is the fluid as a reaction object, a reactor that carries out a reaction using the catalyst structure, and a manufacturing method for the catalyst structure.

### BACKGROUND ART

Since a reactor (a compact reactor) that uses a minute space as a reaction field, such as a reactor in which at least one side of a flow passage cross section is approximately several millimeters, and a microreactor in which at least one side of a flow passage cross section is less than 1 millimeter, has a large specific surface area per unit volume, heat transfer efficiency is high, and a reaction rate and a yield can be improved. In addition, since convection and a diffusion mode can be arbitrarily set, control for actively setting quick mixing and density distribution can be performed. Accordingly, it becomes possible to strictly control a reaction in the above-mentioned reactor.

In such a reactor, a catalyst is arranged in a reaction-side flow passage (the reaction field), a fluid as a reaction object (hereinafter referred to as a reaction fluid) flows through the reaction-side flow passage, and thereby a reaction is promoted. Patent Literature 1 discloses a technology of arranging a catalyst in a reaction-side flow passage. In this technology, the catalyst is carried on a metal plate of a corrugated-plate shape (a corrugated shape), and the metal plate carrying the catalyst is installed in the reaction-side flow passage so that the catalyst is uniformly arranged throughout the reaction-side flow passage.

### CITATION LIST

### PATENT LITERATURE

Patent Literature 1: Japanese Patent Laid-Open Publication No. 2000-154001

### SUMMARY OF INVENTION

### TECHNICAL PROBLEM

In the technology described in the above-described Patent Literature 1, an inside of the reaction-side flow passage is partitioned by the metal plate, thereby a plurality of flow passages is formed, and flows of the reaction fluids that flow through the flow passages become a laminar flow.

For this reason, a mass transfer coefficient from bulks (portions of the reaction fluids that have not touched interfaces) of the reaction fluids that flow through the flow passages partitioned by the metal plate to a catalyst surface becomes small, and a diffusion resistance on the catalyst surface becomes large. Accordingly, contact efficiency of the reaction fluids and the catalyst is rate-limited, and that reaction efficiency might be suppressed.

In addition, since the flows of the reaction fluids become the laminar flow, the reaction fluids are guided to an outlet, while flow rate distribution (concentration distribution) of an inlet of the reaction-side flow passage is maintained as it is. In this case, when the flow rate distribution of the inlet has a deviation, a reaction efficiency in a point having a large flow rate decreases more than that in a point having a small flow rate, and a reaction efficiency of a whole reactor might decrease.

In view of such problems, the present invention aims at providing a catalyst structure, a reactor, and a manufacturing method for the catalyst structure that can improve contact efficiency of a fluid as a reaction object and a catalyst, and can achieve improvement in reaction efficiency of the fluid.

### SOLUTION TO PROBLEM

A first aspect of the present invention is a catalyst structure provided in a reaction-side flow passage of a reactor, a fluid as a reaction object flowing through the reaction-side flow passage, the catalyst structure including: a plurality of pillar-shaped pin rods extending in a direction intersecting with a flow direction of the fluid in the reaction-side flow passage; and a catalyst carried on surfaces of the pin rods to promote a reaction of the fluid.

A second aspect of the present invention is a reactor including: a reaction-side flow passage through which a fluid as a reaction object flows; and a catalyst structure provided in the reaction-side flow passage. The catalyst structure includes: a plurality of pin rods extending in a direction intersecting with a flow direction of the fluid in the reaction-side flow passage, and a catalyst carried on surfaces of the pin rods to promote a reaction of the fluid.

A density of the pin rods of the catalyst structure may be smaller on a downstream side than on an upstream side of the flow direction of the fluid in the reaction-side flow passage.

The reactor may further include a temperature controller configured to heat or cool the fluid from an outside of the reaction-side flow passage.

The temperature controller may include a heat-medium-side flow passage through which a heat medium flows to perform heat exchange with the fluid flowing through the reaction-side flow passage, and the heat-medium-side flow passage may be provided side by side with the reaction-side flow passage through a heat transfer partition wall.

The heat medium may be gas.

The reaction-side flow passage and the heat-medium-side flow passage may be alternately stacked.

To solve the foregoing object, a manufacturing method for a catalyst structure according to the present invention, the catalyst structure provided in a reaction-side flow passage of a reactor including the reaction-side flow passage through which a fluid as a reaction object flows, the method includes: alternately stacking a slit plate and a spacer to form a structure, the slit plate including a plurality of slits formed therein, and the spacer having a notch formed in a position corresponding to the slit and a plate part arranged between the slits, when stacking the slit plate and the spacer; and carrying a catalyst for promoting a reaction of the fluid on a surface of the stacked structure.

### ADVANTAGEOUS EFFECTS OF INVENTION

According to the present invention, contact efficiency of the fluid as the reaction object and the catalyst can be improved, and it becomes possible to achieve improvement in reaction efficiency of the fluid.

### BRIEF DESCRIPTION OF DRAWINGS

[Fig. 1] Figs. 1(a) and 1(b) are views for illustrating a reactor according to an embodiment of the present invention.
[Fig. 2] Fig. 2(a) is a view for illustrating a heat-medium-side flow passage according to the embodiment of the present invention, and Fig. 2 (b) is a view for illustrating a reaction-side flow passage according to the embodiment of the present invention.
[Fig. 3] Figs. 3(a) to 3(c) are views for illustrating a configuration of a catalyst structure according to the embodiment of the present invention.
[Fig. 4] Figs. 4(a) and 4(b) are views for illustrating a catalyst structure of a comparative example.
[Fig. 5] Fig. 5 is a flowchart for illustrating a flow of treatment in a manufacturing method for the catalyst structure according to the embodiment of the present invention.
[Fig. 6] Figs. 6(a) to 6(c) are views for illustrating a stacking process according to the embodiment of the present invention.
[Fig. 7] Figs. 7(a) to 7(c) are views for illustrating a catalyst structure according to a modified example of the embodiment of the present invention.

### DESCRIPTION OF EMBODIMENTS

Hereinafter, a preferred embodiment of the present invention will be explained in detail with reference to accompanying drawings. Dimensions, materials, other specific numerical values, etc. shown in such an embodiment are merely exemplification for facilitating understanding of the invention, and they do not limit the present invention unless otherwise specified in advance. Note that in the specification and the drawings, overlapping explanation of elements having substantially the same functions and configurations is omitted by attaching the same symbols to the elements, and that illustration of elements having no direct relation to the present invention is omitted. In addition, a fluid as a reaction object is referred to as a reaction fluid.

### (Reactor 100)

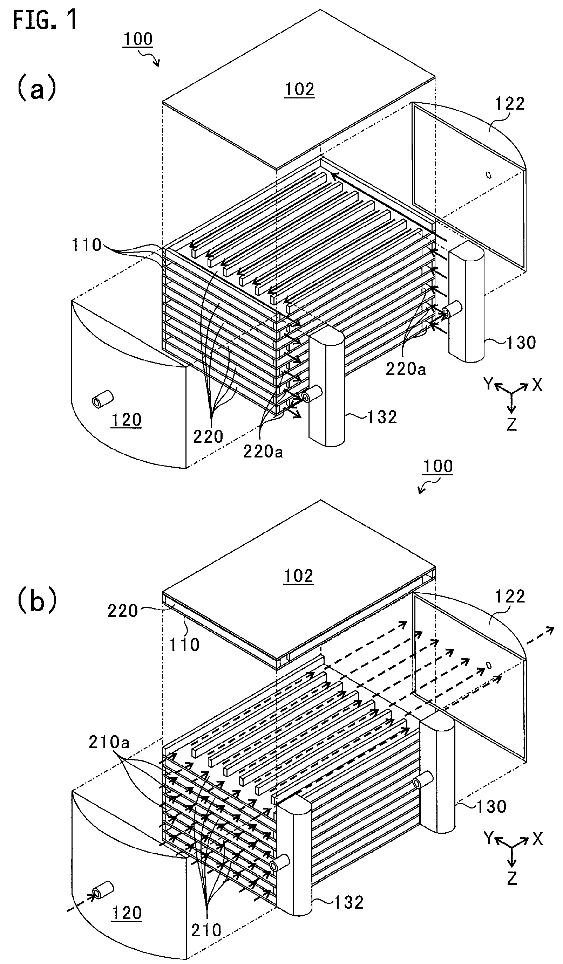

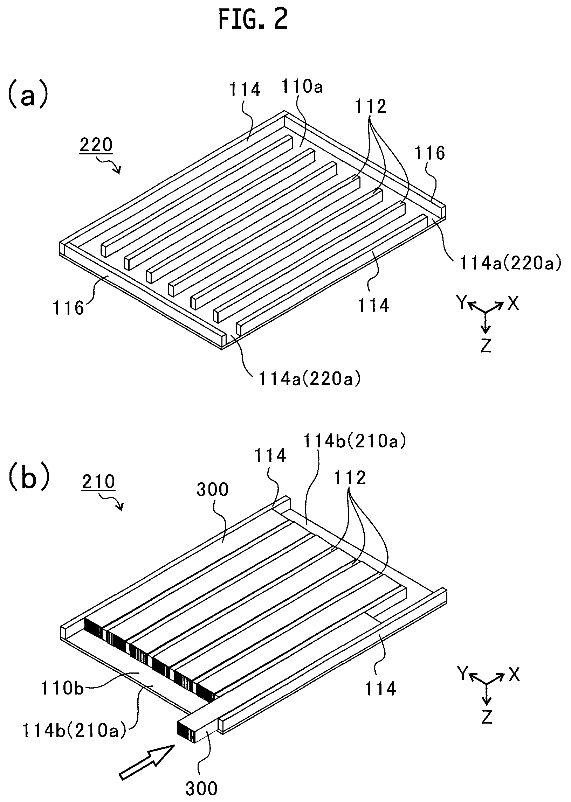

Figs. 1 (a) and 1 (b) are views for illustrating a reactor 100 according to the embodiment. Fig. 2 (a) is a view for illustrating a heat-medium-side flow passage 220. Fig. 2(b) is a view for illustrating a reaction-side flow passage 210. An X-axis, a Y-axis, and a Z-axis that perpendicularly intersect with each other are defined as shown in each drawing. In Figs. 1(a) and 1(b), description of a catalyst structure 300 is omitted in order to facilitate understanding.

As shown in Figs. 1(a) and 1(b), the reactor 100 has a structure in which a plurality of heat transfer partition walls 110 is stacked while being separated from each other at a predetermined interval. In addition, the reactor 100 includes: a top surface 102; the heat transfer partition walls 110 (they are also shown with reference characters 110a or 110b in some cases) ; a reaction fluid inlet 120; a reaction fluid outlet 122; a heat medium inlet 130; and a heat medium outlet 132. These are all formed with a metal material (for example, a heat-resistant metal, such as stainless steel (SUS310, Haynes (registered trademark) 230)).

When the reactor 100 is manufactured, the heat transfer partition walls 110 are stacked to be joined to each other, and the top surface 102 is joined to the uppermost heat transfer partition wall 110. The reaction fluid inlet 120, the reaction fluid outlet 122, the heat medium inlet 130, and the heat medium outlet 132 are then joined to the stacked heat transfer partition walls 110, respectively. Although a joining method used in manufacturing the reactor 100 is not limited, for example, TIG (Tungsten Inert Gas) welding and diffusion bonding can be utilized.

Among spaces partitioned by the heat transfer partition walls 110, a space, which communicates with the reaction fluid inlet 120 and the reaction fluid outlet 122 through holes 210a formed on a reaction fluid inlet 120 side and a reaction fluid outlet 122 side, serves as the reaction-side flow passage 210. In addition, among the spaces partitioned by the heat transfer partition walls 110, a space, which communicates with the heat medium inlet 130 and the heat medium outlet 132 through holes 220a formed on a heat medium inlet 130 side and a heat medium outlet 132 side, serves as the heat-medium-side flow passage 220. In the reactor 100 of the embodiment, the reaction-side flow passage 210 and the heat-medium-side flow passage 220 are provided side by side with (in parallel to) each other while being partitioned by the heat transfer partition wall 110, and the reaction-side flow passage 210 and the heat-medium-side flow passage 220 are alternately stacked.

As shown in Fig. 2(a), a bottom surface of the heat-medium-side flow passage 220 is configured with the heat transfer partition wall 110 (it is shown with the reference character 110a in Fig. 2(a)). In addition, a top surface of the heat-medium-side flow passage 220 is configured with the top surface 102 or the heat transfer partition wall 110 (it is shown with the reference character 110b in Fig. 2(b)) that will be mentioned later. A plurality of ribs 112 for holding a gap between the heat transfer partition walls 110 is erected on the heat transfer partition wall 110a. Side wall parts 114 that configure side walls of the reactor 100, and side bars 116 for preventing mixing-in of the fluid from the reaction fluid inlet 120 are erected on the heat transfer partition wall 110a. In addition, in the side wall parts 114 located on both sides of the heat transfer partition wall 110a, a notch 114a is provided in the side wall part 114 to which the heat medium inlet 130 and the heat medium outlet 132 are joined. When the heat transfer partition walls 110 are stacked, the notch 114a forms the hole 220a. A heat medium is introduced into the heat-medium-side flow passage 220 from the heat medium inlet 130 through the hole 220a by the formation of the hole 220a. Alternatively, the heat medium is discharged from an inside of the heat-medium-side flow passage 220 to the heat medium outlet 132 through the hole 220a.

A bottom surface of the reaction-side flow passage 210 is configured with the heat transfer partition wall 110b as shown in Fig. 2(b). In addition, a top surface of the reaction-side flow passage 210 is configured with the heat transfer partition wall 110a. The plurality of ribs 112 for holding the gap between the heat transfer partition walls 110, and the plurality of side wall parts 114 are erected also on the heat transfer partition wall 110b similarly to the above-described heat transfer partition wall 110a. Note that unlike the heat transfer partition wall 110a, the side bar 116 is not provided on the heat transfer partition wall 110b. Therefore, a gap 114b is formed between the wall parts 114 located on both sides of the heat transfer partition wall 110b. The gap 114b forms the hole 210a, when the heat transfer partition walls 110 are stacked. A reaction fluid is introduced into the reaction-side flow passage 210 from the reaction fluid inlet 120 through the hole 210a by the formation of the hole 210a. Alternatively, a reaction product is discharged from an inside of the reaction-side flow passage 210 to the reaction fluid outlet 122 through the hole 210a.

A catalyst structure 300 that promotes a reaction of the reaction fluid is provided in the reaction-side flow passage 210. A specific configuration of the catalyst structure 300 will be explained in detail later.

As shown by arrows of continuous lines in Fig. 1 (a), the heat medium is introduced from the heat medium inlet 130, flows through the heat-medium-side flow passage 220, and is discharged from the heat medium outlet 132. Meanwhile, as shown by arrows of broken lines in Fig. 1(b), the reaction fluid is introduced from the reaction fluid inlet 120, flows through the reaction-side flow passage 210, and is discharged from the reaction fluid outlet 122. Note that the reaction fluid and the heat medium have a relation of counterflows in the embodiment as shown in Fig. 1.

As described above, the reaction-side flow passage 210 and the heat-medium-side flow passage 220 are provided side by side with each other while being partitioned by the heat transfer partition wall 110. According to this configuration, the heat medium performs heat exchange with the reaction fluid that flows through the reaction-side flow passage 210 through the heat transfer partition wall 110, in flowing through the heat-medium-side flow passage 220. Namely, when an endothermic reaction is carried out in the reaction-side flow passage 210, the heat-medium-side flow passage 220 and the heat medium supply heat to (heat) the reaction fluid that flows through the reaction-side flow passage 210. When an exothermic reaction is carried out in the reaction-side flow passage 210, the heat-medium-side flow passage 220 and the heat medium function as a temperature controller that removes heat of (cools) the reaction fluid that flows through the reaction-side flow passage 210.

The endothermic reaction, for example, includes a steam reforming reaction of methane shown in the following Chemical formula (1), and a dry reforming reaction of methane shown in Chemical formula (2).

CH₄ + H₂O -> 3H₂ + CO ... Chemical formula (1)

CH₄ + CO₂ -> 2H₂ + 2CO ... Chemical formula (2)

In addition, the exothermic reaction, for example, includes: a shift reaction shown in the following Chemical formula (3); a methanation reaction shown in Chemical formula (4); and an FT (Fischer Tropsch) synthesis reaction shown in Chemical formula (5).

CO + H₂O -> CO₂ + H₂ ... Chemical formula (3)

CO + 3H₂ -> CH₄ + H₂O ... Chemical formula (4)

(2n+1) H₂ + nCO -> CₙH₂ₙ₊₂ + nH₂O ... Chemical formula (5)

Note that gas flows through the heat-medium-side flow passage 220 as the heat medium in the embodiment. In this case, handling of the reactor becomes easy, compared with a case where the heat medium is configured with liquid.

As explained above, the reaction fluid flows through the reaction-side flow passage 210 provided as a reaction field, and the heat medium that performs heat exchange with the reaction fluid flows through the heat-medium-side flow passage 220. In the reactor 100 according to the embodiment, the heat-medium-side flow passage 220 is provided side by side with the reaction-side flow passage 210 across the heat transfer partition wall 110. Accordingly, the reactions (the endothermic reaction and the exothermic reaction) are efficiently carried out in the reaction-side flow passage 210.

Hereinafter, there will be explained in detail the catalyst structure 300 that is provided in the reaction-side flow passage 210 of the reactor 100, and promotes the reaction of the reaction fluid.

### (Catalyst structure 300)

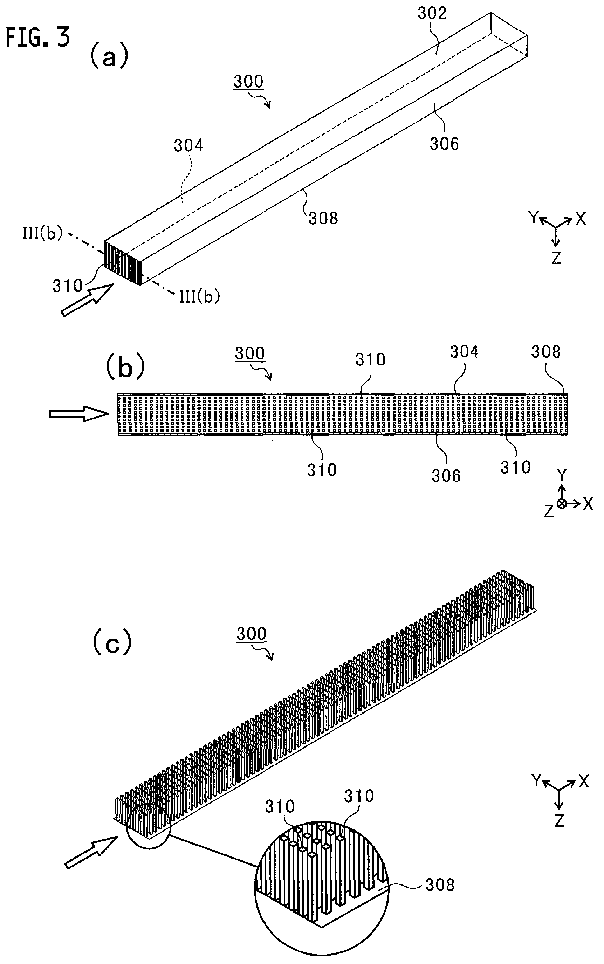

Figs. 3(a) to 3(c) are views for illustrating a specific configuration of the catalyst structure 300. Fig. 3 (a) is a perspective view of the catalyst structure 300. Fig. 3(b) is an XY cross-sectional view of a line III (b) -III (b) in Fig. 3 (a). Fig. 3(c) is a perspective view in which a top surface 302 and side surfaces 304 and 306 of the catalyst structure 300 have been omitted. An X-axis, a Y-axis, and a Z-axis that perpendicularly intersect with each other are defined as shown in Figs. 3(a) to 3(c). In addition, a flow direction of the reaction fluid is shown by an outlined arrow in Figs. 3(a) to 3(c).

As shown in Figs. 3(a) to 3(c), the catalyst structure 300 is formed in a hollow shape surrounded by the top surface 302, the side surfaces 304 and 306, and a bottom surface 308. A plurality of pin rods 310 is arranged in the surrounded space.

The pin rod 310 is formed in a pillar shape (for example, a square pillar shape). The pin rods 310 are configured to extend in a direction that intersects with the flow direction of the reaction fluid, in the catalyst structure 300 being provided in the reaction-side flow passage 210. In the embodiment, the pin rods 310 are connected to the top surface 302 and the bottom surface 308 so as to extend in the direction perpendicular to the flow direction of the reaction fluid.

Additionally, a catalyst that promotes a reaction of the reaction fluid is carried on the top surface 302, the side surfaces 304 and 306, the bottom surface 308, and surfaces of the pin rods 310.

As described above, the catalyst structure 300 includes the plurality of pin rods 310. Accordingly, in the catalyst structure 300 being installed in the reaction-side flow passage 210, flows of the reaction fluids that flow through the reaction-side flow passage 210 (in the catalyst structure 300) can be made a turbulent flow.

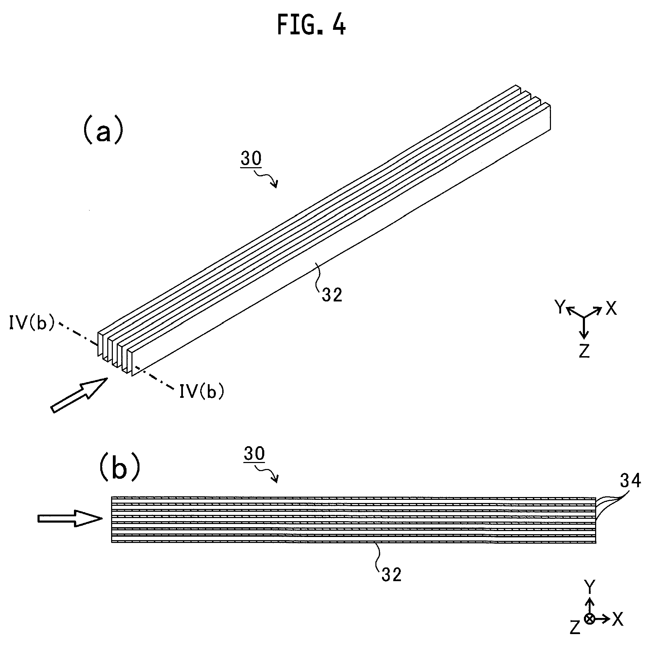

Figs. 4(a) and 4(b) are views for illustrating a catalyst structure 30 of a comparative example. Fig. 4 (a) is a perspective view of the catalyst structure 30. Fig. 4(b) is an XY cross-sectional view of a line IV (b) -IV (b) in Fig. 4 (a). An X-axis, a Y-axis, and a Z-axis that perpendicularly intersect with each other are defined as shown in Figs. 4(a) and 4(b). In addition, a flow direction of the reaction fluid is shown by an outlined arrow in Figs. 4 (a) and 4 (b).

As shown in Fig. 4 (a), the catalyst structure 30 of the comparative example includes a raised and depressed plate-shaped (corrugated-plate-shaped or corrugated-shaped) body part 32, and a catalyst carried on the body part 32. Accordingly, when the catalyst structure 30 is installed in the reaction-side flow passage 210, the body part 32 forms a plurality of (seven in this example) flow passages 34 in the reaction-side flow passage 210 as shown in Fig. 4 (b). In this case, since an object that hinders flows of the reaction fluids is not present in the flow passages 34, the reaction fluids that flow through the flow passages 34 become a laminar flow. For this reason, a mass transfer coefficient from bulks of the reaction fluids that flow through the flow passages 34 to a catalyst surface becomes small, and a diffusion resistance on the catalyst surface becomes large.

In addition, since the reaction fluids that flow through the flow passages 34 become the laminar flow, the reaction fluids are guided to an outlet, while flow rate distribution in an inlet of the reaction-side flow passage 210 is maintained as it is. In this case, when the flow rate distribution of the inlet has a deviation, reaction efficiency in a point having a large flow rate may decrease more than that in a point having a small flow rate. That is, reaction efficiency of the whole reactor might decrease.

Consequently, the catalyst structure 300 according to the embodiment includes the plurality of pin rods 310 as mentioned above. The plurality of pin rods 310 makes the flows of the reaction fluids into a turbulent flow. As a result of this, the mass transfer coefficient from the bulks of the reaction fluids that flow through the reaction-side flow passage 210 to the catalyst surface can be increased, and it becomes possible to reduce the diffusion resistance on the catalyst surface. Accordingly, contact efficiency of the reaction fluid and the catalyst can be improved, and it becomes possible to improve reaction efficiency.

In addition, since the flows of the reaction fluids that flow through the reaction-side flow passage 210 become the turbulent flow, the reaction fluids are mixed while flowing through the reaction-side flow passage 210. Accordingly, even if the flow rate distribution (density distribution) of the inlet of the reaction-side flow passage 210 has a deviation, the flow rate distribution is equalized while the reaction fluids flow through the reaction-side flow passage 210. As a result of this, variation in the reaction efficiency in the reaction-side flow passage 210 can be reduced, and it becomes possible to suppress a situation where reaction efficiency of the whole reactor 100 decreases.

In addition, since the catalyst structure 300 includes the top surface 302, the side surfaces 304 and 306, and the bottom surface 308, a contact area with the heat transfer partition wall 110 included in the reaction-side flow passage 210 can be increased, compared with the catalyst structure 30 of the comparative example. As a result of this, a heat transfer efficiency of the reaction-side flow passage 210 (the reaction fluid) and the heat-medium-side flow passage 220 can be improved, and it becomes possible to improve the reaction efficiency.

Note that the top surface 302, the side surfaces 304 and 306, the bottom surface 308, and the pin rods 310 included in the catalyst structure 300 are configured with a heat-resistant alloy that mainly contains Fe (iron), Cr (chromium), Al (aluminum), and Y (yttrium), for example, a metal of Fecralloy (registered trademark) or the like. In addition, a carrier of the catalyst is appropriately selected according to a reaction carried out by the reactor 100 and, for example, it is one or more carriers selected from a group of Al₂O₃ (alumina), TiO₂ (titania), ZrO₂ (zirconia), CeO₂ (ceria), and SiO₂ (silica). In addition, the catalyst (an active metal) is appropriately selected according to the reaction carried out by the reactor 100 and, for example, it is one or more catalysts selected from a group of Ni (nickel), Co (cobalt), Fe (iron), Pt (platinum), Ru (ruthenium), Rh (rhodium), and Pd (palladium).

A size of the catalyst structure 300 will be explained although it does not limit the present invention. A width of the catalyst structure 300 in the Y-axis direction (refer to Fig. 3 (a) ) is, for example, 12 mm. A height of the catalyst structure 300 in the Z-axis direction is, for example, 4 mm. A cross-sectional area of the pin rod 310 is, for example, 0.01 to 1 mm². A distance between the pin rods 310 (a distance of a gap between the pin rods 310) is, for example, not more than 1 mm.

### (Manufacturing method for catalyst structure 300)

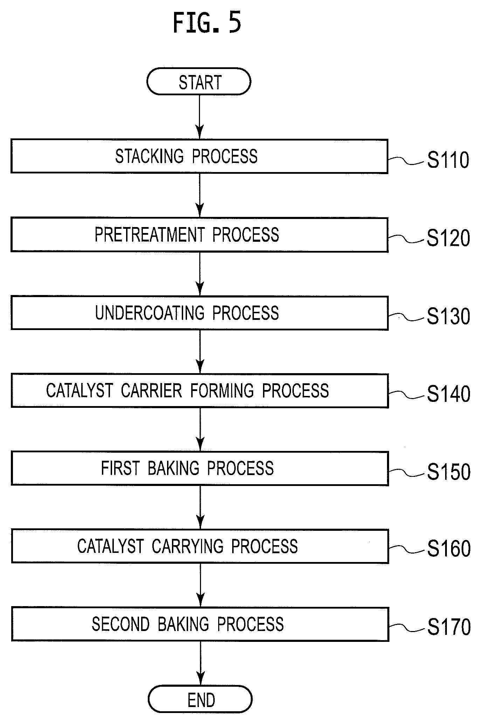

Subsequently, a method for manufacturing the above-described catalyst structure 300 will be explained. Fig. 5 is a flowchart for illustrating a flow of treatment in the manufacturing method for the catalyst structure 300. As shown in Fig. 5, the manufacturing method for the catalyst structure 300 is configured to include: a stacking process S110; a pretreatment process S120; an undercoating process S130; a catalyst carrier forming process S140; a first baking process S150; a catalyst carrying process S160; and a second baking process S170. Hereinafter, each process will be mentioned in detail.

### (Stacking process S110)

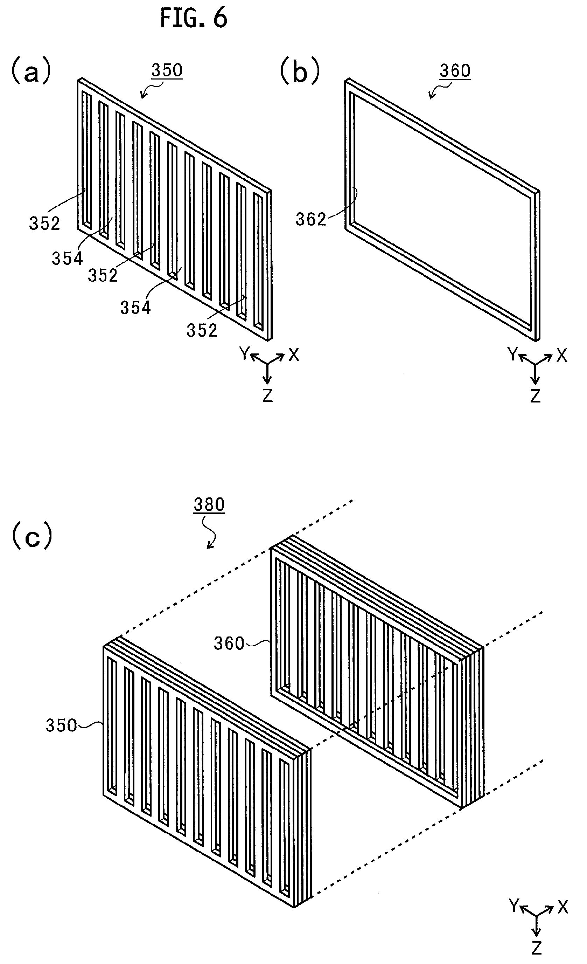

Figs. 6(a) to 6(c) are views for illustrating the stacking process S110. As shown in Fig. 6(a), a plurality of slits 352 is formed in a slit plate 350, while being disposed side by side with each other. Meanwhile, a notch 362 is formed in a spacer 360 as shown in Fig. 6(b). The notch 362 is located in a position corresponding to the slit 352 and a plate part 354 arranged between the slits 352, when the slit plate 350 and the spacer 360 are stacked. In the stacking process S110, the slit plate 350 and the spacer 360 are alternately stacked, and joining by brazing, welding, etc. is performed to form a structure 380 (refer to Fig. 6(c)).

Note that the slit plate 350 and the spacer 360 is configured with a heat-resistant alloy that mainly contains Fe (iron), Cr (chromium), Al (aluminum), and Y (yttrium), for example, a metal of Fecralloy (registered trademark) or the like.

### (Pretreatment process S120)

In the pretreatment process S120, the structure 380 is degreased using acetone, subsequently, the structure 380 is exposed under a predetermined gaseous atmosphere, and is heat-treated for a predetermined time at a predetermined temperature. As a result of this, a needle-like crystal that mainly contains Al₂O₃ can be deposited on a surface of the structure 380.

### (Undercoating process S130)

After the pretreatment process S120 is performed, the structure 380 on which the needle-like crystal has been deposited is immersed in a suspension containing an undercoating agent (for example, boehmite) and nitric acid, and is subsequently pulled up from the suspension, and excess slurry is removed. The structure 380 pulled up from the suspension is then dried. In this way, the structure 380 is coated with the undercoating agent.

### (Catalyst carrier forming process S140)

After the undercoating process S130 is performed, the structure 380 coated with the undercoating agent is immersed in a suspension containing a carrier (for example, γ-phase Al₂O₃) of a catalyst, boehmite, and nitric acid, and is subsequently pulled up from the suspension, and excess slurry is removed. The structure 380 pulled up from the suspension is then dried. Subsequently, the structure 380 is exposed under a predetermined gaseous atmosphere, and is heat-treated for a predetermined time at a predetermined temperature.

The catalyst carrier forming process S140 is repeatedly performed a plurality of times, and thereby a desired amount of catalyst carrier can be made to adhere onto the surface of the structure 380.

### (First baking process S150)

After the catalyst carrier forming process S140 is performed, the structure 380 to which the catalyst carrier adheres is exposed under a predetermined gaseous atmosphere, and is heat-treated for a predetermined time at a predetermined temperature, and the catalyst carrier is baked. As a result of this, a porous catalyst carrier is formed on the surface of the structure 380.

### (Catalyst carrying process S160)

After the first baking process S150 is performed, the structure 380 in which the porous catalyst carrier has been formed on the surface is immersed in a solution in which a salt of an active metal (for example, Ni) has been dissolved, and is subsequently pulled up from the solution, and the structure 380 pulled up from the solution is dried.

The catalyst carrying process S160 is repeatedly performed a plurality of times, and thereby a desired amount of catalyst can be made to be carried on the surface of the structure 380.

### (Second baking process S170)

After the catalyst carrying process S160 is performed, the structure 380 carrying the catalyst is exposed under a predetermined gaseous atmosphere, and is heat-treated for a predetermined time at a predetermined temperature, and the catalyst is baked. As a result of this, a porous catalyst is formed on the surface of the structure 380.

As explained above, according to the catalyst structure 300, the reactor 100 including the catalyst structure 300, and the manufacturing method for the catalyst structure 300 according to the embodiment, contact efficiency of the reaction fluid and the catalyst can be improved, and it becomes possible to achieve improvement in reaction efficiency of the reaction fluid.

### (Modified example)

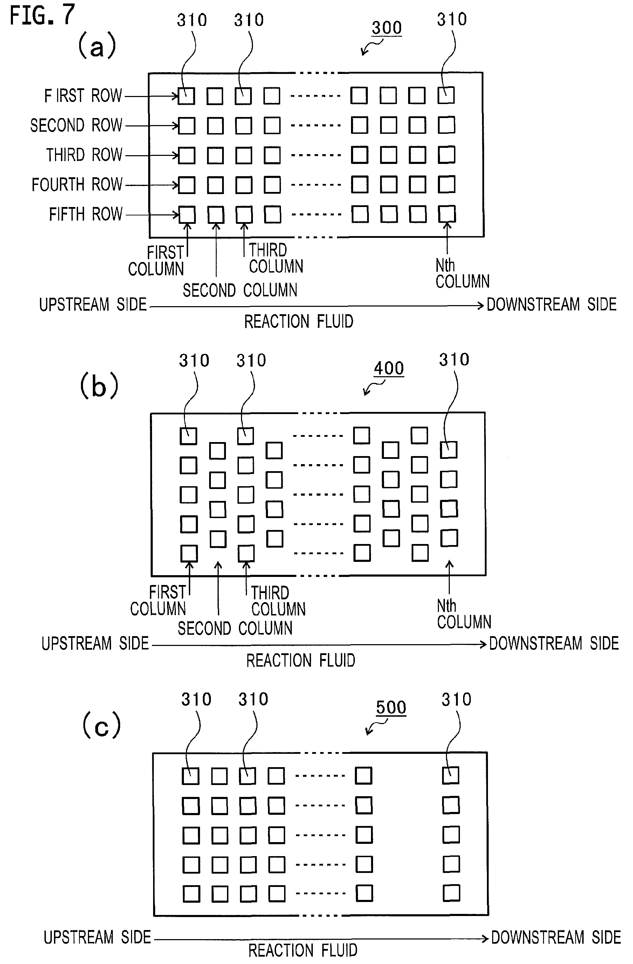

Figs. 7(a) to 7(c) are diagrams for illustrating a catalyst structure according to a modified example, and are the diagrams for illustrating arrangement of the pin rods 310. Note that the pin rod 310 is shown to be large, and the number of pin rods 310 is shown to be small in each drawing in order to facilitate understanding.

Fig. 7 (a) shows arrangement of the pin rods 310 in the catalyst structure 300 explained in the above-described embodiment. As shown in this drawing, the pin rods 310 are arranged at equal intervals in a column direction (a direction perpendicular to the flow direction of the reaction fluid) , and also in a row direction (the flow direction of the reaction fluid).

Fig. 7 (b) shows arrangement of the pin rods 310 in the catalyst structure 400 according to the modified example. As shown in this drawing, when the arrangement of the pin rods 310 is set to be the first column, the second column, ..., and the nth column from an upstream side toward a downstream side of the reaction fluid, positions in the column direction of the pin rods 310 of an arbitrary column and positions in the column direction of the pin rods 310 of a column adjacent to the arbitrary column may be deviated from each other.

In addition, Fig. 7 (c) shows arrangement of the pin rods 310 in a catalyst structure 500 according to the modified example. As shown in this drawing, the pin rods 310 may be arranged so that a density of the pin rods 310 (for example, density per unit area) is smaller on the downstream side than on the upstream side of the flow direction of the reaction fluid in the reaction-side flow passage 210, when the catalyst structure 500 is arranged in the reaction-side flow passage 210. That is, the pin rods 310 may be arranged so that a specific surface area of the catalyst (the pin rods 310) is smaller on the downstream side than on the upstream side.

When a reaction is carried out in the reaction-side flow passage 210 of the reactor 100, the reaction of the reaction fluid proceeds as the reaction fluid flows through the reaction-side flow passage 210 (in other words, due to flowing of the reaction fluid) . Accordingly, a reaction frequency becomes high on the upstream side of the reaction-side flow passage 210, and it becomes low on the downstream side of the reaction-side flow passage 210. This is because while relatively many unreacted substances are contained in the reaction fluid on the upstream side of the reaction-side flow passage 210, the unreacted substances are converted into target reaction products to thereby be relatively decreased on the downstream side of the reaction-side flow passage 210.

Accordingly, even if the specific surface area of the catalyst (the pin rods 310) on the downstream side of the reaction-side flow passage 210 is reduced, the reduction does not affect reaction efficiency.

Meanwhile, when the catalyst structure 500 is manufactured by use of the above-described manufacturing method for the catalyst structure, the number of spacers 360 can be reduced by stacking the spacer 360 with a larger thickness (a thickness in the X-axis direction in Fig. 6) on the downstream side than on the upstream side, and it becomes possible to reduce cost required for the slit plate 350 and the spacer 360.

Note that the catalyst structure 500 in which the pin rods 310 have been arranged so that the density of the pin rods 310 is smaller on the downstream side than on the upstream side may be configured so that the distance between adjacent columns of the pin rods 310 is larger on the downstream side than on the upstream side as mentioned above. Alternatively, the catalyst structure 500 may be configured so that the number of pin rods 310 of a same column is smaller on the downstream side than on the upstream side. That is, a distance between the pin rods 310 of the same column may be increased.

Hereinbefore, although the preferred embodiment of the present invention has been explained with reference to the accompanying drawings, it is needless to say that the present invention is not limited to such an embodiment. It is apparent that those skilled in the art can conceive of various change examples or correction examples in a category described in claims, and they are also naturally understood to belong to the technical scope of the present invention.

For example, although in the above-described embodiment, a case has been explained as an example where the pin rod 310 is a square pillar, a cross-sectional shape of the pin rod 310 is not limited as long as the pin rod 310 has a pillar shape, and the pin rod 310 may have a cylindrical shape, or a polygonal shape, such as a triangular shape.

In addition, although in the above-described embodiment, a case has been explained as an example where the catalyst is carried on the top surface 302, the side surfaces 304 and 306, the bottom surface 308, and the surfaces of the pin rods 310, the catalyst may just be carried at least on the surfaces of the pin rods 310.

In addition, although in the above-described embodiment, the catalyst structure 300 configured so that the pin rods 310 extend in the direction perpendicular to the flow direction of the reaction fluid has been explained, a catalyst structure configured so that the pin rods 310 extend in the direction intersecting with the flow direction of the reaction fluid may be employed, and even such a configuration can also make the flows of the reaction fluids a turbulent flow.

In addition, in the above-described embodiment, a case has been explained as an example where the spacer 360 is configured to include portions corresponding to all of the top surface 302, the side surfaces 304 and 306, and the bottom surface 308, when the spacer 360 is made into the catalyst structure 300. However, in the spacer 360, the notch 362 may just be formed in positions corresponding to the slit 352 and the plate part 354, when the spacer 360 is stacked with the slit plate 350. When the spacer 360 is made into the catalyst structure 300, the spacer 360 may just be configured to include a portion (portions) corresponding to any one or more selected from a group of the top surface 302, the side surfaces 304 and 306, and the bottom surface 308. That is, a gap may just be able to be maintained between the slit plates 350, when the slit plates 350 are stacked.

In addition, in the above-described embodiment, the heat-medium-side flow passage 220 has been explained as a temperature controller as an example. However, the temperature controller may be a heater or a cooler, as long as it can heat or cool the reaction fluid from an outside of the reaction-side flow passage 210.

In addition, although in the above-described embodiment, a case has been explained as an example where the heat medium that flows through the heat-medium-side flow passage 220 is gas, the heat medium may be liquid.

In addition, although in the above-described embodiment, the reactor 100 has been explained in which the reaction-side flow passage 210 and the heat-medium-side flow passage 220 are alternately stacked, they need not necessarily be stacked.

In addition, although in the above-described embodiment, a case has been explained as an example where the reaction fluid that flows through the reaction-side flow passage 210 and the heat medium that flows through the heat-medium-side flow passage 220 have the relation of counterflows, the reaction fluid and the heat medium may have a relation of parallel flows.

In addition, the manufacturing method for the catalyst structure (a method for carrying a catalyst on a structure) explained in the above-described embodiment is merely exemplification, and other methods can also be utilized.

### INDUSTRIAL APPLICABILITY

The present invention can be utilized for a catalyst structure that promotes the reaction of a reaction fluid, which is the fluid as a reaction object, a reactor that carries out a reaction using a catalyst structure, and manufacturing method for a catalyst structure.

## Claims

1. A catalyst structure provided in a reaction-side flow passage of a reactor, a fluid as a reaction object flowing through the reaction-side flow passage, the catalyst structure comprising:
a plurality of pillar-shaped pin rods extending in a direction intersecting with a flow direction of the fluid in the reaction-side flow passage; and
a catalyst carried on surfaces of the pin rods to promote a reaction of the fluid.

2. A reactor comprising:
a reaction-side flow passage through which a fluid as a reaction object flows; and
a catalyst structure provided in the reaction-side flow passage, including :
a plurality of pin rods extending in a direction intersecting with a flow direction of the fluid in the reaction-side flow passage, and
a catalyst carried on surfaces of the pin rods to promote a reaction of the fluid.

3. The reactor according to claim 2, wherein
a density of the pin rods of the catalyst structure is smaller on a downstream side than on an upstream side of the flow direction of the fluid in the reaction-side flow passage.

4. The reactor according to claim 2 or 3, further comprising a temperature controller configured to heat or cool the fluid from an outside of the reaction-side flow passage.

5. The reactor according to claim 4, wherein
the temperature controller includes a heat-medium-side flow passage through which a heat medium flows to perform heat exchange with the fluid flowing through the reaction-side flow passage, and the heat-medium-side flow passage is provided side by side with the reaction-side flow passage through a heat transfer partition wall.

6. The reactor according to claim 5, wherein
the heat medium is gas.

7. The reactor according to claim 5 or 6, wherein
the reaction-side flow passage and the heat-medium-side flow passage are alternately stacked.

8. A manufacturing method for a catalyst structure provided in a reaction-side flow passage of a reactor including the reaction-side flow passage through which a fluid as a reaction object flows, the manufacturing method comprising:
alternately stacking a slit plate and a spacer to form a structure, the slit plate including a plurality of slits formed therein, and the spacer having a notch formed in a position corresponding to the slit and a plate part arranged between the slits, when stacking the slit plate and the spacer; and
carrying a catalyst for promoting a reaction of the fluid on a surface of the stacked structure.
